# EUROPEAN PATENT APPLICATION

(11) **EP 1 868 057 A2**
(43) Date of publication of application: **19.12.2007**
(21) Application number: 07011410.3
(22) Date of filing: 11.06.2007
(51) Int. Cl.: G05D 16/20, F16K 31/06

(54) **Pressure regulating valve**

(30) Priority: 13.06.2006 US 813146 P; 24.10.2006 US 585634
(71) Applicant: Hilite International, Inc., Cleveland OH 44113 (US)
(72) Inventor: Brower, Brent J., Whitehall, Michigan 49461 (US); Parker, Kenneth J., Lake Orion, Michigan 48362 (US); Stanhope, Dan G., Muskegon, Michigan 49441 (US)
(74) Representative: Jones Day

(57) **Abstract**

A hydraulically controlled device, such as a valve in a vehicle transmission, is connected to a hydraulic fluid circuit with a pump and a reservoir through a pressure regulating valve. Said valve comprises a valve body that has a bore in an exhaust flow path extending from a supply port to an exhaust port. The bore is bounded by a cylindrical inner surface with a stationary throttling corner. A cylindrical outer surface of a throttling member has a movable throttling corner. The movable throttling corner on the throttling member is sized to constrict the exhaust flow path upon moving coaxially toward the stationary throttling corner on the valve body. The movable throttling corner and the cylindrical outer surface are together sized to close the exhaust flow path upon moving coaxially past the stationary throttling corner and into the bore.

## Description

### RELATED APPLICATIONS

This application claims the priority benefit of provisional US patent application 60/813,146, filed June 13, 2006, which is incorporated by reference.

### TECHNICAL FIELD

This technology relates to a valve that regulates hydraulic fluid pressure for a hydraulically controlled device.

### BACKGROUND

A hydraulically controlled device, such as a valve in a vehicle transmission, may be connected in a hydraulic fluid circuit with a reservoir and a pump or other source of hydraulic fluid pressure. The output pressure of the pump normally has a steady value that is higher than needed to operate the controlled device. A pressure regulating valve may be connected in the circuit between the pump and the controlled device to provide a range of pressures corresponding to the operating range of pressures appropriate for the controlled device.

### SUMMARY

The claimed invention provides a regulating valve for a hydraulically controlled device. The regulating valve includes a valve body with a pressure supply port operatively connectable to a source of hydraulic fluid pressure. An exhaust port on the valve body is operatively connectable to the reservoir, and a control port is operatively connectable to the controlled device. A solenoid moves a throttling member within the valve body to shift the valve throughout a range from a first condition with a lowest control port pressure to a second condition with a highest control port pressure.

The valve body further has a bore in an exhaust flow path that extends from the supply port to the exhaust port. The bore is bounded by a cylindrical inner surface with a stationary throttling corner. A cylindrical outer surface of the throttling member has a movable throttling corner. The movable throttling corner on the throttling member is sized to shift the valve toward the second condition by constricting the exhaust flow path upon moving coaxially toward the stationary throttling corner on the valve body. The movable throttling corner and the cylindrical outer surface are together sized to shift the valve into the second condition upon moving coaxially past the stationary throttling corner and into the bore.

### BRIEF DESCRIPTION OF THE DRAWINGS

Figure 1 is a schematic view of a hydraulic fluid circuit with a pressure regulating valve.
Figure 2 an enlarged partial side view of the pressure regulating valve of Fig. 1.
Figures 3 and 4 are views similar to Fig. 2, showing parts in different positions.
Figure 5 is a partial perspective view of alternative valve parts.
Fig. 6 is a view similar to Fig. 2 including the alternative valve parts of Fig. 5.
Figure 7 is a side view of other alternative valve parts.
Figure 8 is an enlarged partial side view of another pressure regulating valve.

### DETAILED DESCRIPTION

The structures shown in the drawings have parts that are examples of the elements recited in the claims. The illustrated structures thus include examples of how a person of ordinary skill in the art can make and use the claimed invention. They are described here to provide enablement and best mode without imposing limitations that are not recited in the claims.

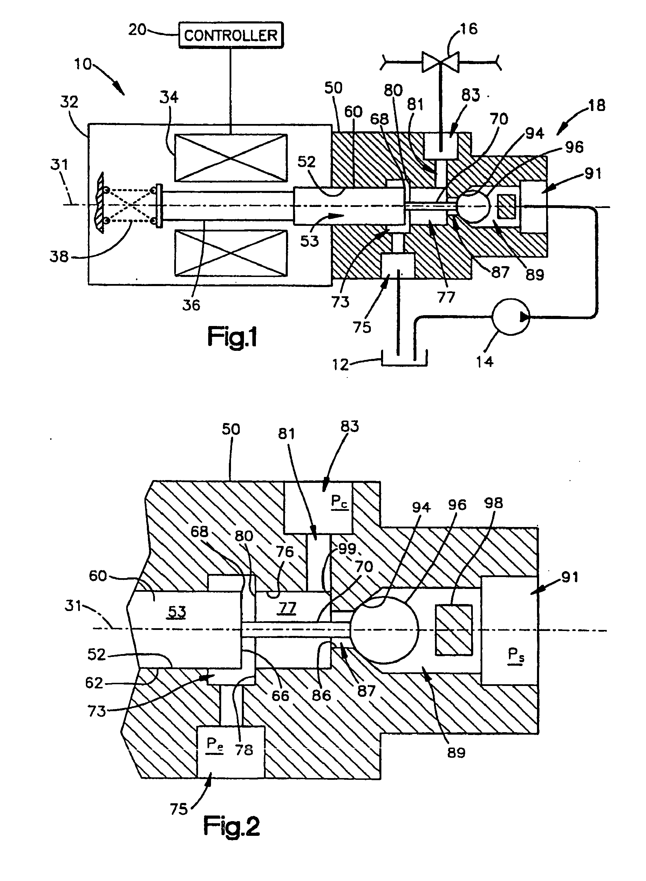

The apparatus 10 shown schematically in Figure 1 is a portion of an automatic transmission system for a vehicle. The parts of the apparatus 10 that are shown in Fig. 1 include a transmission fluid reservoir 12, a pump 14 for circulating the transmission fluid, and a gear shift valve 16 that is operated by hydraulic fluid pressure. A pressure regulating valve 18 is interposed between the pump 14 and the gear shift valve 16. In operation, the pressure regulating valve 18 provides the gear shift valve 16 with control pressure P_{c} under the direction of a controller 20.

The pressure regulating valve 18 is a generally cylindrical structure with a longitudinal central axis 31. A solenoid housing 32 at one end of the valve 18 contains a coil 34, an armature 36, and a spring 38. The coil 34 is energized by the controller 20. The armature 36 is movable back and forth along the axis 31, alternately with and against the bias of the spring 38, in accordance with the energized condition of the coil 34.

A valve body 50 is located at the opposite end of the valve 18 and projects longitudinally from the housing 32. For clarity of illustration the valve body 50 in this example is shown schematically as a single part. A first cylindrical inner surface 52 of the valve body 50 defines a first cylindrical bore 53 that is centered on the axis 31. A cylindrical exhaust spool 60 fits closely within the bore 53 to slide back and forth along the axis 31. As best shown in the enlarged view of Figure 2, the spool 60 has a cylindrical side surface 62 and a circular outer end surface 66. The diameter of the cylindrical side surface 62 closely approaches that of the cylindrical inner surface 52 so that the spool 60 can slide within the bore 53 with minimal clearance radially between the adjacent cylindrical surfaces 52 and 62. The spool 60 further has a circular throttling edge 68 at the corner where the outer end surface 66 meets the side surface 62. A tappet or pintle 70 projects coaxially from the outer end surface 66.

An exhaust annulus 73 extends radially outward from the first bore 53. The exhaust annulus 73 communicates with an exhaust port 75 at the periphery of the valve body 50. A second cylindrical inner surface 76 (Fig. 2) defines a second cylindrical bore 77 extending axially from the exhaust annulus 73. The second bore 77 has the same diameter as the first bore 53. An annular inner surface 78 extends radially outward from the second cylindrical inner surface 76 such that the valve body 50 has a circular throttling edge 80 at the corner where those two surfaces 76 and 78 meet. A control passage 81 extends radially outward to communicate the second bore 77 with a control port 83 at the periphery of the valve body 50.

As further shown in Fig. 2, a third cylindrical inner surface 86 defines a third bore 87. The third bore 87 extends coaxially from the second bore 77 to an inlet chamber 89 with a supply port 91. A conical surface 94 extends axially and radially outward from the third bore 87 to define a valve seat. A ball 96 is movable in the chamber 89 between the valve seat 94 and a ball stop structure 98. As shown in Figs. 1 and 2, the ball 96 in the illustrated example is seated in line contact with the valve seat 94 at a location spaced axially and radially from the circular edge where the conical surface 94 surrounds the open end of the third bore 87. However, the valve 18 could alternatively have a ball that is seated in line contact with the valve seat 94 at the circular edge.

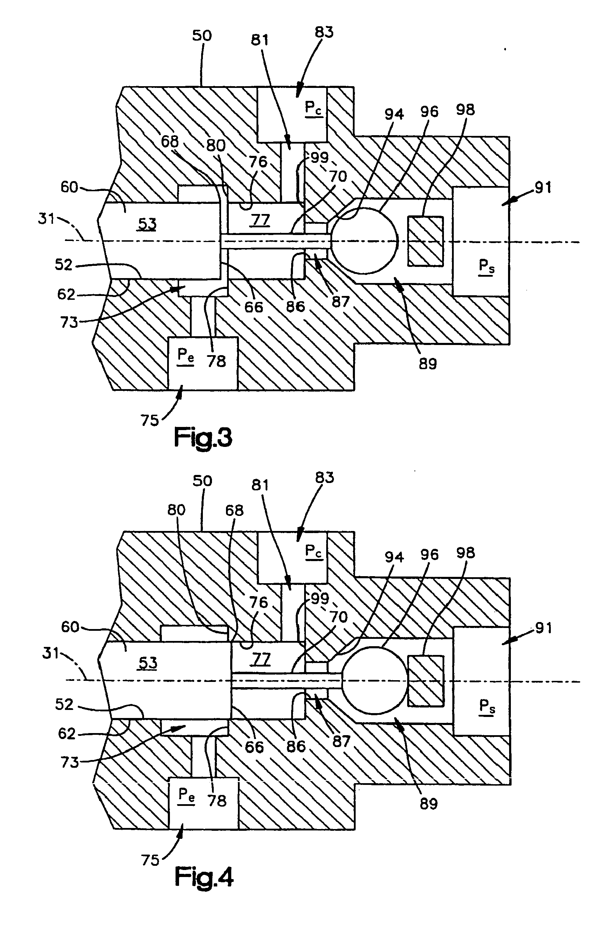

Referring again to Fig. 1, the apparatus 10 includes hydraulic lines connecting the supply port 91 with the pump 14, the control port 83 with the gear shift valve 16, and the exhaust port 75 with the reservoir 12. The controller 20 operates the gear shift valve 16 by shifting the pressure regulating valve 18 to vary the hydraulic fluid pressure P_{c} at the control port 83. The various conditions of the pressure regulating valve 18 include a fully closed condition as shown in Figs. 1 and 2, a range of intermediate conditions, such as the condition shown for example in Figure 3, and a fully open condition as shown in Figure 4.

When the valve 18 is in the fully closed condition of Figs. 1 and 2, the ball 96 is seated on the valve seat 94 under the hydraulic fluid pressure Pₛ at the supply port 91. This effectively isolates the control port 83 and the exhaust port 75 from the supply port 91 so that the control pressure P_{c} and the exhaust pressure Pₑ are both substantially zero. A small amount of leakage past the ball 96 may occur when the valve 18 is in the fully closed condition, but the low leakage will drain through the exhaust port 75 and should have no significant effect on the control and exhaust pressures P_{c} and Pₑ.

The controller 20 shifts the valve 18 out of the fully closed condition by energizing or de-energizing the coil 34 to move the armature 36 from left to right, as viewed Fig. 1, along the axis 31. The armature 36 then pushes the spool 60 and the pintle 70 along the axis 31 so that the pintle 70 begins to move the ball 96 off the valve seat 94, as shown in Fig. 3. This initiates a flow of transmission fluid past the ball 96 from the inlet chamber 89 to the third bore 87 under the supply pressure Pₛ provided by the pump 14. As the pintle 70 moves the ball 96 from left to right along the axis 31, the throttling corner 68 of the spool 60 simultaneously moves axially toward the throttling corner 80 of the valve body 50 to constrict the fluid flow path extending from second bore 77 to the exhaust annulus 73. This has the effect of increasing the control pressure P_{c} at the control port 83. The reverse effect is accomplished by de-energizing or energizing the coil 34 to move the spool 60 axially back toward its original position so that the throttling edges 68 and 80 move axially apart. This increases the flow area to the exhaust annulus 73, and simultaneously allows the supply pressure Pₛ to move the ball 96 back toward the valve seat 94 with a corresponding constriction of the flow area at that location. In this manner the control pressure P_{c} is varied by varying the axial position of the spool 60.

As the throttling corner 68 of the spool 60 moves axially past the throttling corner 80 of the valve body 50 to enter the second bore 77, as shown in Fig. 4, the pintle 70 moves the ball 96 fully away from the valve seat 94 and the valve 18 attains a fully open condition. Although the fluid flow path from the second bore 77 to the exhaust annulus 73 is then fully closed, except for a low leakage that may occur as noted above, the fluid flow path from the inlet chamber 89 through the third bore 87 and into the second bore 77 is fully open. This has the effect of increasing the control pressure P_{c} to a level at which it approaches the supply pressure Pₛ.

When the valve 18 is in the fully open condition, the outer end surface 66 of the spool 60 remains spaced apart from the opposed inner surface 99 of the valve body 50, but a close fit between the cylindrical side surface 62 of the spool 60 and the surrounding cylindrical inner surface 76 of the valve body 50 permits only a low leakage to the exhaust annulus 73. The valve 18 is thus configured to achieve the desirable performance objective of low leakage, and does so without the use of axially abutting valve and valve seat surfaces that might otherwise be needed to sufficiently isolate the exhaust annulus 73 from the supply pressure Pₛ when the valve 18 is in the fully open condition.

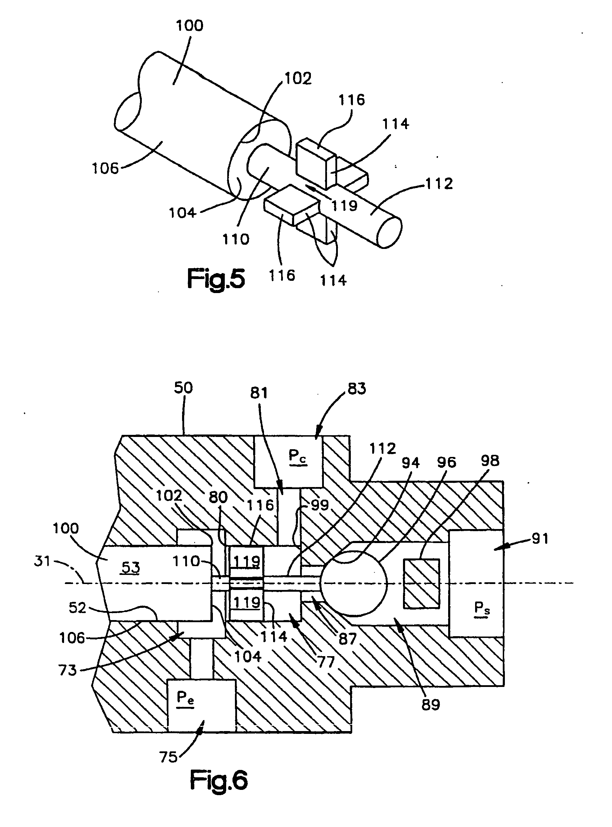

An alternative exhaust spool 100 is shown partially in Figure 5. Like the spool 60 described above, this spool 100 has a circular throttling edge 102 at the corner where its circular outer end surface 104 meets its cylindrical side surface 106. A reduced diameter shaft 110 projects coaxially from the outer end surface 104. A pintle 112 projects coaxially from the shaft 110. Spacers 114 project radially from the shaft 110 at locations that are spaced axially from the circular outer end surface 104 of the spool 100.

In the illustrated example, the spacers 114 are configured as cylindrical segments that are evenly spaced apart circumferentially around the shaft 110. Each spacer 114 has a radially outer surface 116 with a cylindrical contour and a diameter equal to that of the cylindrical side surface 106. This configuration enables the spacers 114 to fit closely within the second bore 77 in the valve body 50 to support and guide the spool 100 for movement along the axis 31, as shown in Fig. 6. More specifically, the spacers 114 support and guide the spool 100 to help ensure that the throttling corner 102 of the spool 100 moves concentrically into and out of the second bore 77 without misalignment that could cause undesirable contact with the adjacent throttling corner 80 of the valve body 50. The spaced-apart locations of the spacers 114 provide intervening open regions 119 that extend axially past the spacers 114 radially outward of the shaft 110. The open regions 119 serve as hydraulic fluid flow passages so that the spacers 114 have minimal interference with the transmission of hydraulic fluid pressure through the second bore 77.

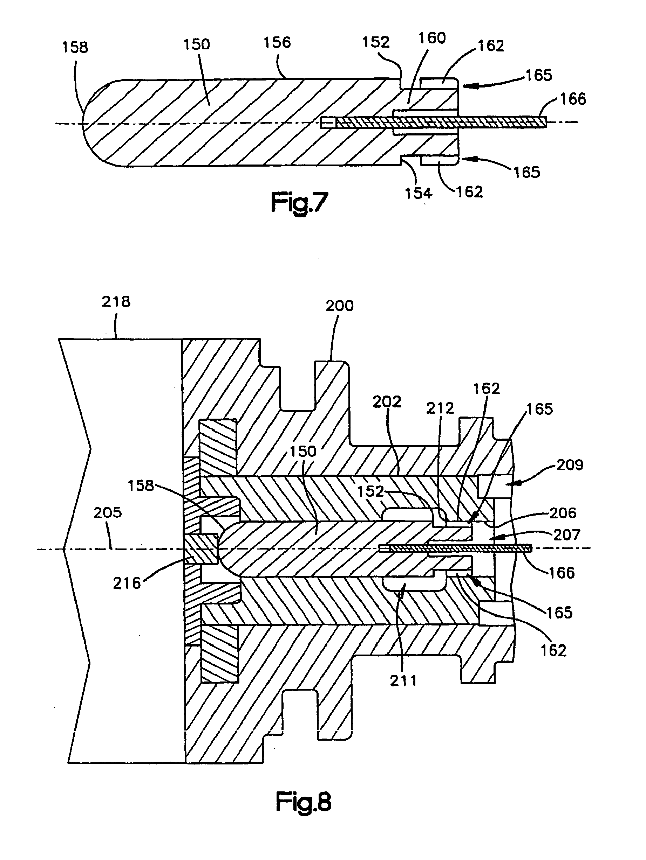

As shown in Figure 7, another alternative exhaust spool 150 has a circular throttling edge 152 at the corner where its circular outer end surface 154 meets its cylindrical side surface 156. Unlike the spool 60 of Fig. 1, which is planar at its opposite ends, the spool 150 of Fig. 7 has an inner end surface 158 with a spherical contour. Compared with the spool 100 of Fig. 5, the spool 150 of Fig. 7 has a wider shaft 160 projecting coaxially from its outer end surface 154, which is correspondingly narrower than the outer end surface 104 shown in Fig. 5. Spacers 162 on the wider shaft 160 have the same outer diameter as the cylindrical side surface 156, and are likewise narrower than the spacers 114 shown in Fig. 5. The spacers 162 thus define intervening open regions 165 that are shaped as shallow channels extending axially over the shaft 160. A tappet or pintle 166 is press-fitted into the spool 150.

The alternative spool 150 of Fig. 7 is installed in an alternative valve body 200, as shown in detail in the partial view of Fig. 8. This valve body 200 is shown to have multiple parts, including a spool guide insert 202. The insert 202 is a tubular part in which the spool 150 is received and supported for sliding movement back and forth along the longitudinal central axis 205. A cylindrical inner surface 206 of the insert 202 defines a bore 207 that communicates a control passage 209 with an exhaust passage 211. The cylindrical inner surface 206 has a circular edge 212 defining a throttling corner that is sized to function in the same manner as the throttling corner 80 described above.

An armature 216 projects from a solenoid housing 218 into engagement with the inner end 158 of the spool 150. The rounded contour of the inner end 158 ensures that the armature 216 will make point contact at the center of the spool 150. The pintle 166 at the outer end of the spool 150 extends axially into engagement with a ball (not shown) that is seated under the supply pressure. The spacers 162 on the spool 150 are sized to slide in the bore 207 of Fig. 8 in the same manner that the spacers 114 on the spool 100 are sized to slide in the bore 77 of Fig. 6. The channels 165 between the spacers 162 serve as hydraulic fluid flow passages through the bore 207. The spacers 162 thus guide the circular throttling corner 152 on the spool 150 to move coaxially toward and past the circular throttling corner 212 on the valve body 200 when the armature 216 pushes the spool 150 from a fully closed position with the lowest control pressure, a shown in Fig. 8, toward and into a fully open position with the highest control pressure.

The patentable scope of the invention is defined by the claims, and may include other examples of how the invention can be made and used. Such other examples, which may be available either before or after the application filing date, are intended to be within the scope of the claims if they have structural elements that do not differ from the literal language of the claims or if they have equivalent structural elements with insubstantial differences from the literal language of the claims.

## Claims

1. A regulating valve for use with a source of hydraulic fluid pressure, a hydraulic fluid reservoir, and a hydraulically controlled device, the regulating valve comprising:
a valve body having a pressure supply port operatively connectable to the source of hydraulic fluid pressure, an exhaust port operatively connectable to the reservoir, and a control port operatively connectable to the controlled device;
a solenoid ; and
a throttling member movable within the valve body under the influence of the solenoid to shift the valve throughout a range from a first condition with a lowest control port pressure to a second condition with a highest control port pressure;
wherein the valve body further has a bore in an exhaust flow path extending from the supply port to the exhaust port, the bore is bounded by a cylindrical inner surface with a stationary throttling corner, and the throttling member has a cylindrical outer surface with a movable throttling corner sized to shift the valve toward the second condition by constricting the exhaust flow path upon moving coaxially toward the stationary throttling corner, with the movable throttling corner and the cylindrical outer surface together being sized to shift the valve into the second condition upon moving coaxially past the stationary throttling corner and into the bore.

2. An apparatus as defined in claim 1 wherein the valve body has a valve seat between the supply port and the exhaust and control ports, a ball is seated on the seat under the hydraulic fluid pressure at the supply port when the valve is in the first condition, and the throttling member is operative to push the ball off the seat upon shifting the valve out of the first condition.

3. An apparatus as defined claim 1 wherein the throttling member and the valve body are free of axially abutting surfaces between the supply port and the exhaust port when the valve is in the second condition.

4. An apparatus as defined claim 1 wherein the throttling member has an end surface bounded by the movable throttling corner, the valve body has an opposed inner surface, and the entire end surface of the throttling member is spaced apart from the opposed inner surface of the valve body when the valve is in the second condition.

5. An apparatus as defined in claim 1 wherein the throttling member is entirely outside the bore when the valve is in the first condition.

6. An apparatus as defined in claim 1 wherein the throttling member is a spool.

7. An apparatus as defined in claim 6 wherein the spool has opposite ends and a single cylindrical side surface between the opposite ends.

8. An apparatus as defined in claim 1 wherein the throttling member has a guide portion configured to remain in the bore to support the throttling member for movement coaxially relative to the stationary throttling corner.

9. An apparatus as defined in claim 8 wherein the guide portion of the throttling member has hydraulic fluid flow passages.

10. An apparatus comprising:
a source of hydraulic fluid pressure:
a hydraulic fluid reservoir;
a hydraulically controlled device; and
a regulating valve having a supply port operatively connected to the source of hydraulic fluid pressure, an exhaust port operatively connected to the reservoir, a control port operatively connected to the controlled device, a solenoid, and a throttling member movable within the valve body under the influence of the solenoid to shift the valve throughout a range from a first condition with a lowest control port pressure to a second condition with a highest control port pressure;
wherein the valve further has a bore in an exhaust flow path extending from the supply port to the exhaust port, the bore is bounded by a cylindrical inner surface with a stationary throttling corner, and the throttling member has a cylindrical outer surface with a movable throttling corner sized to shift the valve toward the second condition by constricting the exhaust flow path upon moving coaxially toward the stationary throttling corner, with the movable throttling corner and the cylindrical outer surface together being sized to shift the valve into the second open condition upon moving coaxially past the stationary throttling corner and into the bore.

11. An apparatus as defined in claim 10 wherein the valve body has a valve seat between the supply port and the exhaust and control ports, a ball is seated on the seat by the hydraulic fluid pressure at the supply port when the valve is in the first condition, and the throttling member is operative to push the ball off the seat upon shifting the valve out of the first condition.

12. An apparatus as defined claim 10 wherein the throttling member and the valve body are free of axially abutting surfaces between the supply port and the exhaust port when the valve is in the second condition.

13. An apparatus as defined claim 10 wherein the throttling member has an end surface bounded by the movable throttling corner, the valve body has an opposed inner surface, and the entire end surface of the throttling member is spaced apart from the opposed inner surface of the valve body when the valve is in the second condition.

14. An apparatus as defined in claim 10 wherein the throttling member is entirely outside the bore when the valve is in the first condition.

15. An apparatus as defined in claim 10 wherein the throttling member is a spool.

16. An apparatus as defined in claim 15 wherein the spool has opposite ends and a single cylindrical side surface between the opposite ends.

17. An apparatus as defined in claim 10 wherein the throttling member has a guide portion configured to remain in the bore to support the throttling member for movement coaxially relative to the stationary throttling corner.

18. An apparatus as defined in claim 17 wherein the guide portion of the throttling member has hydraulic fluid flow passages.

19. An apparatus as defined in claim 10 wherein the controlled device is a valve in a vehicle transmission.
